# EUROPÄISCHE PATENTSCHRIFT

(11) **EP 2 241 114 B1**
(45) Veröffentlichungstag und Bekanntmachung des Hinweises auf die Patenterteilung: **17.05.2017**
(21) Anmeldenummer: 09707334.0
(22) Anmeldetag: 06.02.2009
(51) Int. Cl.: H04Q 1/14

(54) **VERTEILERMODUL UND MODULARES VERTEILERFELD**
DISTRIBUTION MODULE, AND MODULAR DISTRIBUTION PANEL
MODULE DE DISTRIBUTION ET PANNEAU DE DISTRIBUTION MODULAIRE

(30) Priorität: 07.02.2008 DE 202008001740 U
(43) Veröffentlichungstag der Anmeldung: 20.10.2010
(73) Patentinhaber: trans data elektronik Gmbh, 49626 Bippen (DE)
(72) Erfinder: ENGEL, Andreas, 44135 Dortmund (DE)
(74) Vertreter: Fitzner, Uwe
(86) Internationale Anmeldenummer: PCT/EP2009/051382
(87) Internationale Veröffentlichungsnummer: WO 2009/098293

(56) Entgegenhaltungen:
- WO-A-2005/051006
- DE-B3-102004 043 763
- GB-A- 2 402 269
- US-A1- 2005 219 830
- US-A1- 2006 198 098

## Beschreibung

Die vorliegende Erfindung betrifft Verteilermodule zur Verwendung in modularen Verteilerfeldern zur Verbindung analog oder digital beschalteter Anschlussbuchsen mit weiteren Verteilerfeldern, weiterführenden Leitungen oder Endgeräten, wobei das Verteilermodul mehrere Anschlussbuchsen an einer Frontseite aufweist. Darüber hinaus betrifft die vorliegende Erfindung modulare Verteilerfelder, die erfindungsgemäße Verteilermodule enthalten.

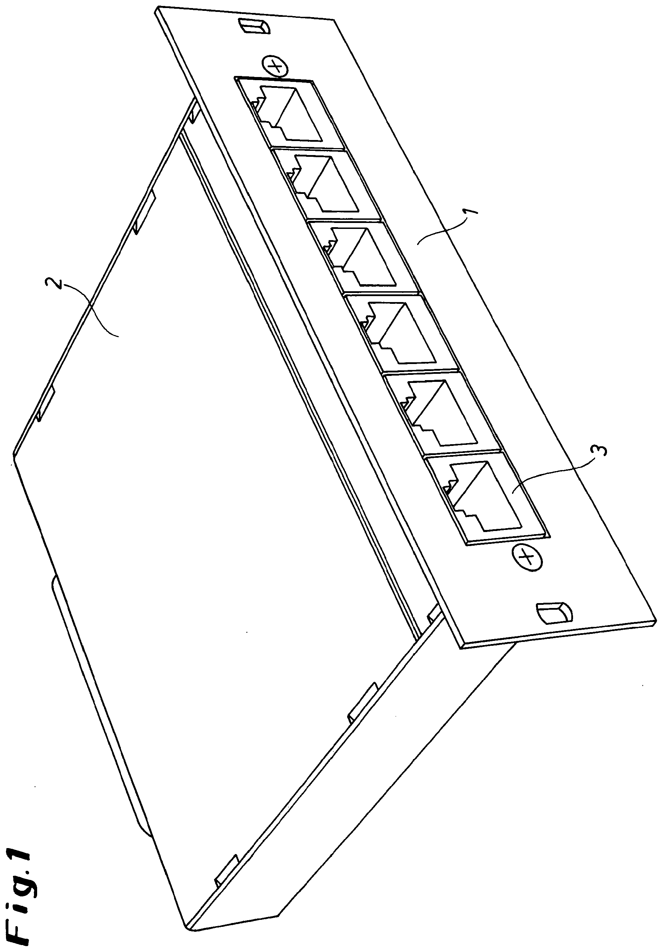

Aus der DE 295 101 85 U1 sind Verteilerfelder, insbesondere für Datenleitungen bekannt, mit welchen durch eine gute Abschirmung hohe Übertragungsraten erzielt werden sollen. Um dies zu erreichen, werden Verteilerfelder mit einer Bodenplatte und einer Frontplatte eingesetzt, wobei die Frontplatte Aussparungen zur Verbindung eines Kabelkontaktes mit einer auf der Rückseite der Frontplatte angeordneten Steckbuchse aufweisen, wobei die Steckbuchsen wiederum auf einer mit Anschlussklemmen versehenen Platine angeordnet sind, die auf der Bodenplatte befestigt werden. Das Verteilerfeld insgesamt besitzt ein allseits geschlossenes Gehäuse mit Einführungsmöglichkeiten für Kabel an der Rückseite. Die Verbindungen der Anschlussbuchsen mit weiterführenden Leitungen erfolgt ausweislich der Fig. 1 durch eine 1:1 Verkabelung von jeder Buchse mit jeweils einem Anschlusskabel. Nachteilig an diesen Verteilerfeldern ist die mangelnde Flexibilität beim Wechsel der Verteilerkonfiguration, da in diesem Fall jedes Mal die manuell aufgelegten Kabel entfernt und neu aufgelegt werden müssen.

Aus der DE 299 13 731 U1 sind modulare Verteilerfelder bekannt, die zum Anschluss von Endgeräten oder weiterführenden Leitungen an Daten- oder Telefonanlagen verwendet werden, wobei Anschlussbuchsen des Verteilerfelds über einen Mehrfachsteckverbinder mit einer Daten- oder Telefonanlage verbunden werden, die jeweils rückseitig an Verteilermodulen angebracht sind. Die dort verwendeten Verteilerfelder sind aufgrund ihrer offenen Konfiguration ohne geschlossenes Gehäuse nicht für die Datenübertragung mit hohen Übertragungsraten geeignet, da die dafür erforderliche Abschirmung nicht erreicht werden kann.

Das Dokument DE102004043763, ADC GMBH, veröffentlicht am 02-02-2006, offenbart zusätzlich ein derartiges Verteilungsmodul. Bei der bevorzugten Ausführungsform gemäß DE 299 13 731 sind die Verbindungskabel am Verteilerfeld-seitigen Ende mit Steckverbindern versehen, welche am Verteiler fest angeordnet sind. Beim vollständigen Einschieben des Verteilermoduls wird eine Verbindung zwischen diesem und dem Steckverbinder des Kabels hergestellt, ohne dass ergänzende Handgriffe zur Verbindung des Verteilermoduls mit dem Kabel erforderlich sind. Diese einerseits als vorteilhaft anzusehende Technik birgt den Nachteil in sich, dass beim Einsetzen des Verteilermoduls das Risiko der fehlerhaften Verbindung oder des Abknickens von Kontakten besteht, was zu einer fehlerhaften Kontaktierung und damit zum Ausfall der Funktionsfähigkeit des Verteilerfelds führen kann.

Erfindungsgemäß werden diese Nachteile des vorstehend beschriebenen Standes der Technik dadurch überwunden, dass Verteilermodule gemäß Oberbegriff des Anspruchs 1 zur Verfügung gestellt werden, wobei das Verteilermodul (1) mehrere Einzelmodule mit jeweils eigenem allseits geschlossenes Gehäuse oder mehrere Anschlussbuchsen (3) mit allseits geschlossenem Gehäuse (2) um die Mehrheit der Anschlussbuchsen (3) aufweist und auf der der Frontseite gegenüberliegenden Rückseite ein Steckverbinder (4) angeordnet ist, welcher durch eine entsprechende Verkabelung im Gehäuse (2) mit den mehreren Anschlussbuchsen (3) an der Frontseite des Verteilermoduls (1) verbunden ist

Durch die Verwendung eines allseits geschlossenen Gehäuses wird die für die Erzielung hoher Datenübertragungsraten zwingend erforderliche gute Abschirmung erreicht. Dies kann noch durch die Verwendung entsprechend hoch abgeschirmter Kabel im Innern des Gehäuses unterstützt werden. Damit lassen sich mit den erfindungsgemäßen Verteilermodulen Übertragungsgeschwindigkeiten erreichen, wie sie in heute üblichen modernen sog. Gigabyte-Netzwerken gefordert werden (Performance nach Klassifizierung Cat. 5 e oder Cat. 6 oder besser).

Unter Einzelmodul wird im folgenden ein allseits geschlossenes Element mit einer Anschlussbuchse an einer Frontseite und der Möglichkeit einer Verkabelung an der der Frontseite gegenüberliegenden Rückseite verstanden. Als Verteilermodul wird im Unterschied dazu ein Element verstanden, welches mehrere Anschlussbuchsen an einer Frontseite aufweist und eine gemeinsamen Verkabelung aller Anschlussbuchsen des Verteilermoduls an der der Frontseite entgegengesetzten Rückseite erlaubt. Ein Verteilermodul kann demzufolge aus mehreren entsprechend zueinander angeordneten Einzelmodulen mit jeweils eigenem allseits geschlossenem Gehäuse bestehen, ohne dass um diese Mehrheit an Einzelmodulen noch ein weiteres allseits geschlossenes Gehäuse zwingend erforderlich ist; durch die Verwendung eines solchen allseits geschlossenen Gehäuses können jedoch Vorteile erzielt werden, weshalb dies eine bevorzugte Ausführungsform darstellt. Alternativ kann ein Verteilermodul auch mehrere Anschlussbuchsen ohne eigenes allseits geschlossenes Gehäuse für jede einzelne Anschlussbuchse aufweisen, wobei ein allseits geschlossenes Gehäuse um diese mehrere Anschlussbuchsen des Verteilermoduls vorhanden ist.

Ein weiterer Gegenstand der vorliegenden Erfindung sind modulare Verteilerfelder, die eines oder mehrere erfindungsgemäße Verteilermodule enthalten.

Bevorzugte Ausführungsformen der vorliegenden Erfindung ergeben sich aus der nachfolgenden Beschreibung und den Unteransprüchen.

Gemäß einer ersten bevorzugten Ausführungsform werden in den erfindungsgemäßen Verteilermodulen Einzelmodule mit einem allseits geschlossenen Gehäuse eingesetzt. Jedes dieser Einzelmodule ist durch sein eigenes allseits geschlossene Gehäuse sehr gut abgeschirmt, was hohe Datenvolumina und Übertragungsgeschwindigkeiten ermöglicht, wie sie in modernen Netzwerken heute verlangt werden. Bei dieser Ausführungsform sind bevorzugt mehrere der Einzelmodule rückseitig derartig zueinander angeordnet, dass der Steckverbinder mit einer Verkabelung mit den Anschlussbuchsen all dieser so zueinander angeordneten Einzelmodule an der Frontseite verbunden ist. Die erwähnte relative Anordnung der Einzelmodule zueinander muss dabei lediglich sicherstellen, dass über einen Steckverbinder eine Verbindung mit den Anschlussbuchsen mehrerer Einzelmodule möglich ist. Von diesem Erfordernis abgesehen, kann die Verknüpfung der Module beliebig erfolgen und an bauliche oder andere Anforderungen flexibel angepasst werden.

Gemäß einer besonders bevorzugten Ausführungsform können mehrere solcher Einzelmodule zusammen beispielsweise in einem eigenen allseits geschlossenen Gehäuse untergebracht werden, was die Abschirmung und damit die anwendungstechnischen Eigenschaften weiter verbessert. Module gemäß dieser Ausführungsform unterscheiden sich rein äußerlich nicht von den erfahrungsgemäßen Verteilermodulen gemäß der nachstehend beschriebenen weiteren bevorzugten Ausführungsform.

Gemäß einer weiteren bevorzugten Ausführungsform weist das erfindungsgemäße Verteilermodul an der Frontseite mehrere Anschlussbuchsen auf (vorzugsweise in Form von dem Fachmann an sich bekannten RJ 45-Anschlussbuchsen). Bevorzugt weisen die erfindungsgemäßen Verteilermodule bei dieser Ausführungsform bis zu 6 Anschlussbuchsen, vorzugsweise bis zu 6 RJ45-Buchsen in einer Reihe auf. Dabei können die Module bei einer Einbauhöhe von 1 HE ein- oder zweireihig gestaltet sein. Weiterhin ist es aufgrund der flachen Bauweise gemäß einer bevorzugten Ausführungsform der erfindungsgemäßen Verteilermodule auch möglich zwei Verteilermodule bei einer Gesamt-Einbauhöhe von 1 HE übereinander anzuordnen. Dabei können zwei gleiche Verteilermodule eingesetzt werden oder aber zwei unterschiedliche Verteilermodule mit unterschiedlichen Anschlusstechniken übereinander angeordnet werden, ohne dass die Gesamthöhe von 1 HE überschritten wird.

Grundsätzlich sind auch Verteilermodule mit einer Einbauhöhe von mehr als 1 HE möglich, was insbesondere bei der Gestaltung von Verteilermodulen mit internen Konvertern zum Übergang zwischen verschiedenartigen Verbindungsmöglichkeiten an Front- und Rückseite der erfindungsgemäßen Verteilermodule von Vorteil sein kann.

Für eine vollständige digitale Beschaltung von RJ45-Anschlussbuchsen werden 8 Anschlussadern benötigt. Daher muss der Steckverbinder entsprechend der Anzahl an zu verbindenden Anschlussbuchsen eine entsprechende Anzahl von Polen aufweisen. Bei einem Modul mit 6 RJ45-Anschlussbuchsen sind zur vollständigen digitalen Beschaltung mindestens 48 Pole erforderlich; es kann jedoch auch jede beliebige andere Zahl von Anschlussbuchsen mit einem Steckverbinder mit der entsprechenden Anzahl von Polen verbunden werden..

Eine weitere bevorzugte Ausführungsform der erfindungsgemäßen Verteilermodule weist an der Frontseite mehrere Anschlussmöglichkeiten für optische Lichtwellenleiterkabel auf. Wie vorstehend allgemein beschrieben, kann das Verteilermodul mehrere Einzelmodule mit jeweils eigenem allseits geschlossenen Gehäuse enthalten oder aber eine Mehrheit von Anschlussbuchsen ohne eigenes Gehäuse für jede Buchse, aber allseits geschlossenem Gehäuse um die Gesamtheit der Buchsen.. In diesem Fall handelt es sich bei dem rückwärtigen Steckverbinder im erfindungsgemäßen Verteilermodul entsprechend um eine Anschlussmöglichkeit für optische Lichtwellenleiterkabel. Bei dieser Ausführungsform sind eine Vielzahl von Gestaltungsmöglichkeiten gegeben und es können eine Vielzahl von Lichtwellenleiter-Verbindungen pro Verteilermodul zur Verfügung gestellt werden. In diesem Zusammenhang sind dem Fachmann beispielsweise sogenannte MPO-Steckverbindungen für Lichtwellenleiterkabel bekannt, die es ermöglichen in einem erfindungsgemäßen Verteilermodul der Höhe 1/2 HE 72 und mehr Lichtwellenleiterverbindungen unterzubringen. Bei einer Einbaubreite von 19 " sind vier solcher Verteilermodule nebeneinander platzierbar, so dass in einem einzigen Verteiler mehr als 288 Verbindungen hergestellt werden können bzw. falls zwei Reihen an Verteilermodulen bei Bauhöhe 1 HE übereinander angeordnet werden, sogar bis zu 576 Verbindungen.

Die erfindungsgemäßen Verteilerfelder weisen ein oder mehrere erfindungsgemäße Verteilermodule auf. Dabei können auch gemischte Verteilerfelder zur Anwendung kommen, die erfindungsgemäße Verteilermodule mit Verbindungsmöglichkeiten über optische Lichtwellenleiter neben Verbindungsmöglichkeiten über konventionelle RJ45-Anschlussbuchsen bieten. Durch die innerhalb des Gehäuses des Verteilermoduls vorhandene feste Verkabelung der frontseitigen Anschlussbuchsen mit der rückseitigen Steckverbindung und der Ausführung des Verteilermoduls mit einem allseits geschlossenen Gehäuse ist diese gemischte Anordnung verschiedener Verteilermodule problemlos möglich, was einen weiteren Vorteil der erfindungsgemäßen Verteilerfelder darstellt. Die Anordnung der unterschiedlichen Verteilermodule im erfindungsgemäßen Verteilerfeld kann dabei nebeneinander oder aber, ohne die Einbauhöhe 1 HE zu überschreiten, auch übereinander erfolgen.

Eine weitere vorteilhafte Möglichkeit ist der Einsatz sogenannter Konvertermodule, d.h. erfindungsgemäßen Verteilermodulen, die rückseitig einen Anschluss von Lichtwellenleitern ermöglichen und an der Frontseite RJ 45 Buchsen aufweisen oder aber eine Gestaltung mit RJ 45 Anschlussmöglichkeit, vorzugsweise über Centronics-Kabel an der Rückseite und einer Anschlussmöglichkeit für Lichtwellenleiterkabel an der Frontseite des Moduls. Bei dieser Ausführungsform enthält das Modul im Innern des allseits geschlossenen Gehäuses die erforderlichen aktiven Komponenten zur Realisierung dieser Anschlussmöglichkeit.

Die erfindungsgemäßen Verteilerfelder können zur Verbindung mehrerer Verteileranlagen, zum Anschluss weiterführender Leitungen oder aber zum Anschluss von Endgeräten dienen. Besonders eignen sie sich zur einfachen Herstellung von festen oder mobilen Gebäudeverkabelungen, da die Zahl der einzubringenden Kabel und der im Verteilerfeld aufzulegenden Kabel minimiert ist.

Als besonderer technisch relevanter Vorteil ist hervorzuheben, dass mit den erfindungsgemäßen Verteilerfeldern unter Verwendung der erfindungsgemäßen Verteilermodule bei einer Einbauhöhe von 1 HE und einer Einbaubreite von 19" aufgrund der guten Abschirmung 48 voll beschaltete RJ45-Verbindungen mit einer Performance gemäß Cat.5 e bzw. Cat.6 oder besser möglich sind, was bislang nicht erreicht werden konnte.

Um die mit dem Verteilermodul bzw. den Verteilerfeldern, die die erfindungsgemäßen Verteilermodule enthalten, erreichten hohen Abschirmungsgrad auch bei der weiterführenden Verkabelung aufrecht zu erhalten, ist es vorteilhaft, hochwertig abgeschirmte Verteilerkabel mit den entsprechenden Kabelverbindungen zu verwenden. Entsprechende Kabel dieser Art sind dem Fachmann an sich bekannt und im Handel erhältlich.

Vorzugsweise werden zur Verbindung von Verteilermodulen mit RJ45-Anschlussbuchsen sog. Centronic-Verbindungskabel verwendet, die mindestens 48 Pole aufweisen und darüber hinaus einen hohen Abschirmungsgrad.

Die erfindungsgemäßen Verteilermodule und Verteilerfelder können auf vielfältige Weise in bestehende Einrichtungen zur Verkabelung integriert werden. So ist eine Montage auf sogenannten Hutschienen ebenso denkbar wie die einfache Integration in Standard Baugruppenträgern, insbesondere solchen mit der Breite 19 ". Die Anordnung der erfindungsgemäßen Verteilermodule bzw. Verteilerfelder kann dabei horizontal oder vertikal erfolgen, abhängig von den vorgegebenen baulichen Gegebenheiten. Entsprechende Montagesyteme und Möglichkeiten sind dem Fachmann an sich bekannt. Nur beispielhaft seien hier Befestigungssysteme mit sogenannten Clip-Verbindern genannt, die ein einfaches wechseln von Modulen möglich machen.

Durch den geringen Raumbedarf der erfindungsgemäßen Verteilermodule und der Verteilerfelder lassen diese sich auch insbesondere in sogenannten Bodentanks oder in Kabelkanälen einsetzen. Auch in sogenannten Consolidation points können die erfindungsgemäßen Verteilermodule bzw. Verteilerfelder vorteilhaft eingesetzt werden. Bei all diesen Anwendungen wirkt sich die Flexibilität, die mit den erfindungsgemäßen Modulen bei gleichzeitig geringem Raumbedarf erreicht wird, wirtschaftlich vorteilhaft für die Kosten einer Systemverkabelung aus. Zudem können in Bodentanks oder Kabelkanälen bei gleichem Raumbedarf eine höhere Anzahl von Anschlussbuchsen platziert werden, als dies bislang der Fall war. Auch dies hat wirtschaftliche Vorteile, da damit mehr Teilnehmer bei gleichem Platz- und Raumbedarf vernetzt werden können, als dies bislang möglich war. Bodentanks und Kabelkanäle sind dem Fachmann an sich bekannt und in der einschlägigen Literatur beschrieben, so dass sich hier weitere Ausführungen erübrigen. Prinzipiell sind die erfindungsgemäßen Verteilermodule bzw. Verteilerfelder in jeder beliebigen Art von Kabelkanal oder Bodentank verwendbar.

Auch Systeme mit sogenannten Consolidation points sind dem Fachmann an sich bekannt und in der Literatur beschrieben, so dass sich nähere Angaben hier erübrigen. Wiederum können die erfindungsgemäßen Verteilermodule bzw. Verteilerfelder in beliebigen derartigen Systemlösungen eingesetzt werden.

Die Erfindung wird nachstehend anhand der beigefügten Abbildungen näher erläutert. Dabei zeigen:
- Fig 1 -: die Frontansicht eines erfindungsgemäßen Verteilermoduls
- Fig. 2 -: die Rückansicht eines erfindungsgemäßen Verteilermoduls
- Fig. 3 -: ein Verteilermodul mit abgenommener Gehäuseoberseite
- Fig. 4 -: ein Verteilerfeld mit 8 erfindungsgemäßen Verteilermodulen von der Vorderseite betrachtet
- Fig. 5 -: ein Verteilerfeld mit 8 erfindungsgemäßen Verteilermodulen von der Rückseite betrachtet und
- Fig. 6 -: ein Verteilermodul zur Verbindung mit optischen Lichtwellenleiterkabeln.

In Fig. 1 ist ein erfindungsgemäßes Verteilermodul 1 in Frontansicht dargestellt, wobei das allseits geschlossene Anschlussgehäuse 2 und die vorderseitigen Anschlussbuchsen 3, in dieser Figur als RJ-45 Anschlussbuchsen ausgeführt, dargestellt sind.

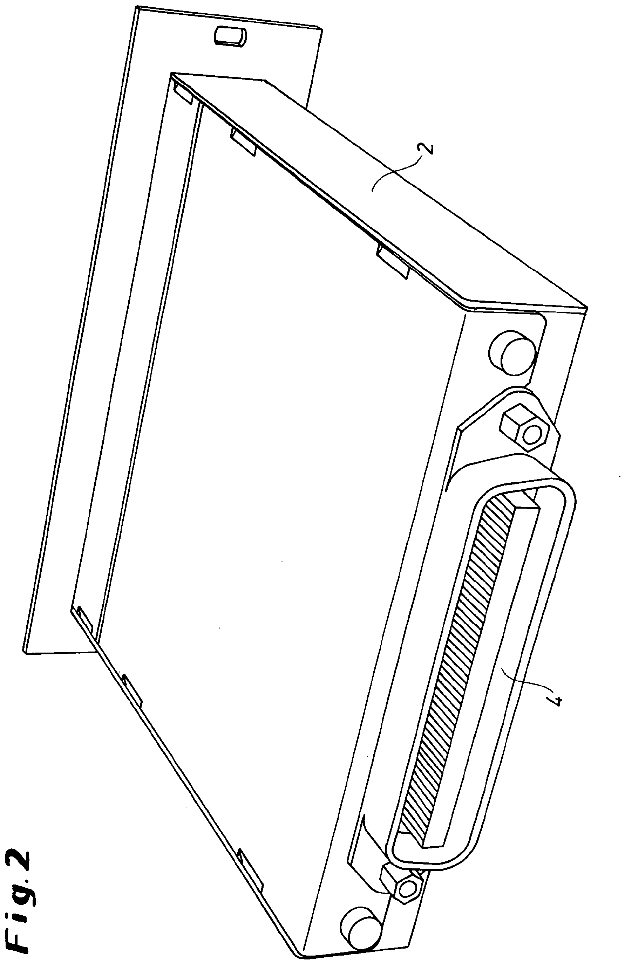

Fig. 2 zeigt ein erfindungsgemäßes Verteilermodul 1 mit allseits geschlossenem Gehäuse 2 von der Rückseite, wodurch der Steckverbinder 4 erkennbar ist.

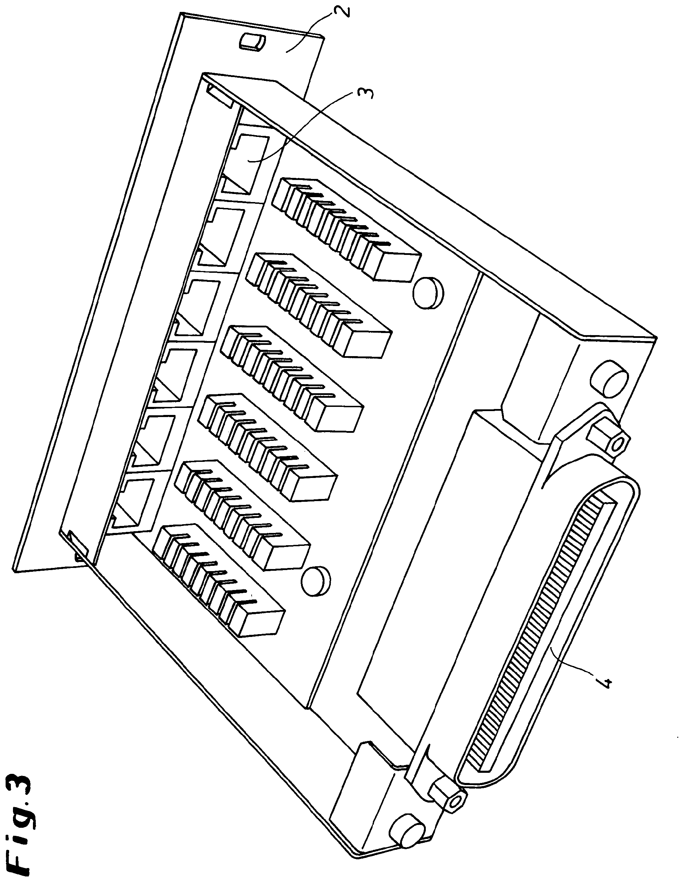

In Fig. 3 ist ein erfindungsgemäßes Verteilermodul mit abgenommener Gehäuseoberseite dargestellt, aus der die Art der internen Verbindung der vorderseitigen Anschlussbuchsen 3 mit dem Steckverbinder 4 erkennbar ist.

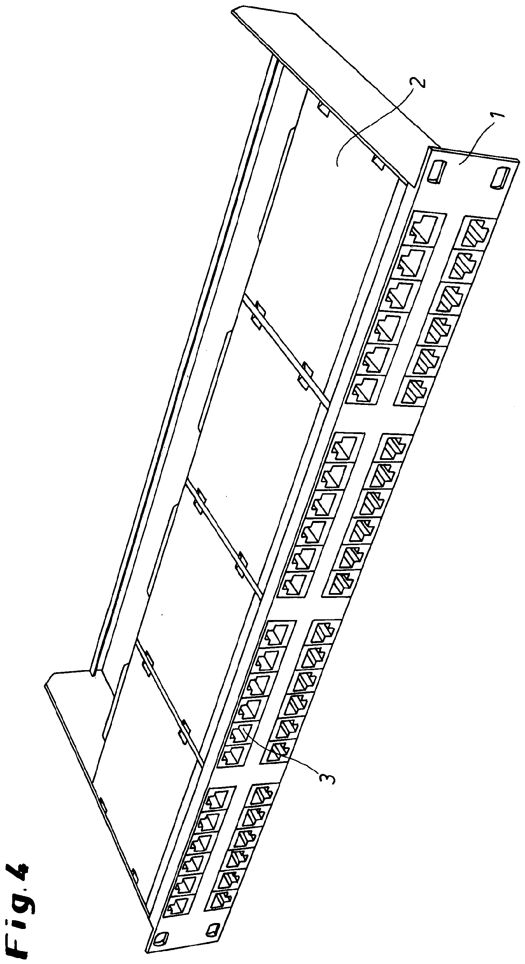

Fig. 4 zeigt ein erfindungsgemäßes Verteilerfeld 5 mit 8 erfindungsgemäßen Verteilermodulen 1 mit allseits geschlossenem Gehäuse 2, wobei die Verteilermodule zweireihig übereinander angeordnet sind und jeweils sechs Anschlussbuchsen 3 an der Vorderseite aufweisen.

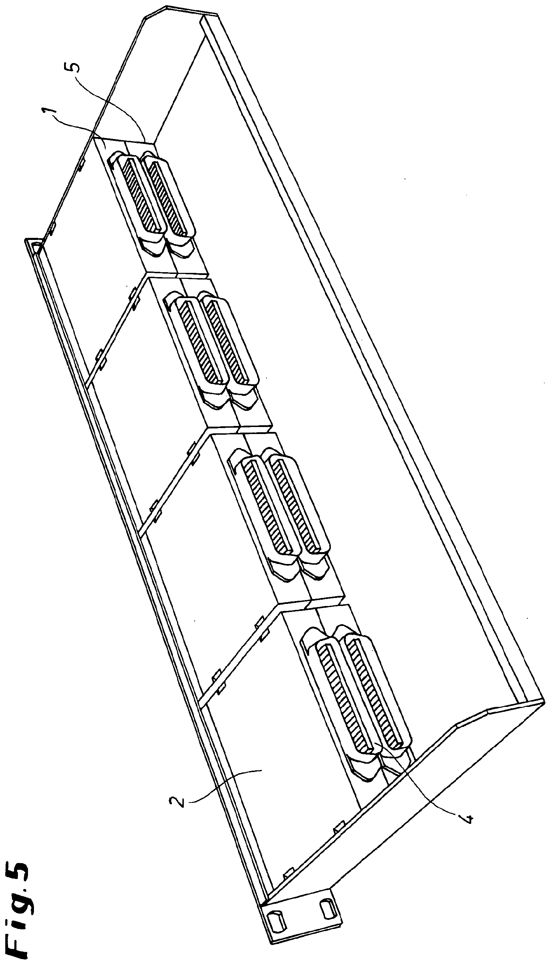

In Fig. 5 ist das Verteilerfeld 5 in rückwärtiger Ansicht dargestellt, wodurch wiederum die Steckverbinder 4 gut erkennbar sind. Ebenfalls erkennbar ist der Einbau der Verteilermodule 1 mit allseits geschlossenem Gehäuse 2.

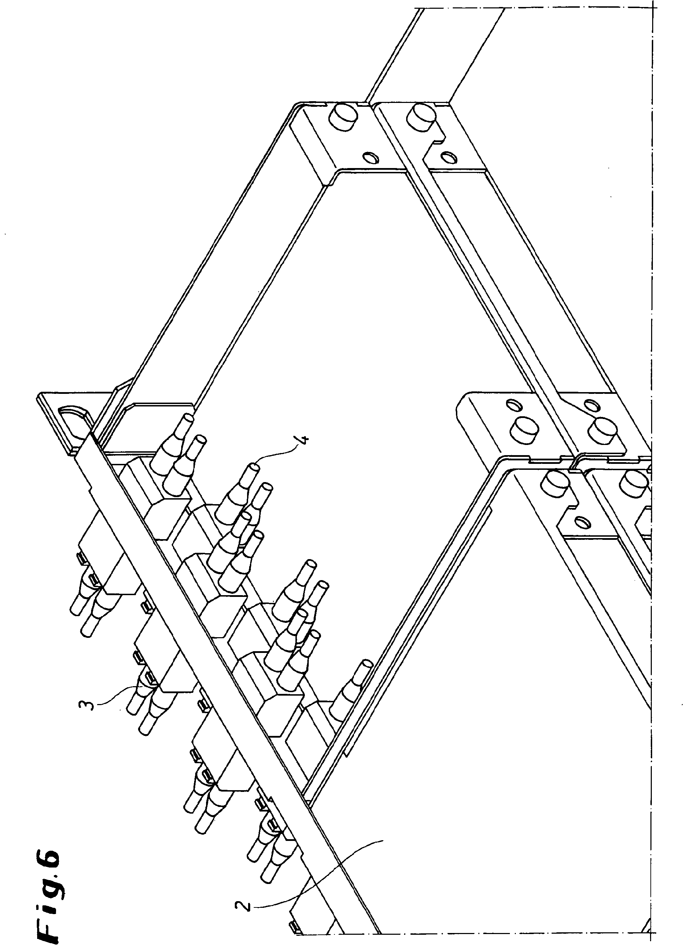

Fig. 6 zeigt ein erfindungsgemäßes Verteilermodul 1 mit Anschlussbuchsen 3 und Steckverbindern 4 an der Rückseite zur Verbindung und zum Anschluss von optischen Lichtwellenleiterkabeln. Das in Fig. 6 gezeigte Verteilermodul 1 ist in ein Verteilerfeld 5 eingebaut.

Die Steckverbinder 4 an der Rückseite der Verteilermodule 1 können bereits mit festen Anschlusskabeln versehen sein, es ist jedoch auch genauso möglich, entsprechende Kabel nachträglich an den Steckverbindern 4 anzubringen. Alternativ kann auch eine Verbindung der frontseitigen Anschlussbuchsen mit dem Steckverbinder an der Rückseite über eine Platine erfolgen. Durch die unverrückbare Anbringung der Steckverbinder 4 und die im Gehäuseinneren vorhandene feste Verbindung der Steckverbindung 4 mit den Anschlussbuchsen 3 ist sichergestellt, dass auch bei einem Wechsel von Anschlusskabeln oder einer Änderung der Konfiguration eine vollständige und gute Kontaktierung erreicht wird. Dies macht die erfindungsgemäßen Verteilermodule und Verteilerfelder in der praktischen Anwendung sehr flexibel.

Die Erfindung ist vorstehend anhand einiger Ausführungsformen beschrieben; sie ist aber nicht auf diese Ausführungsformen beschränkt. Wesentlich ist, dass durch die gehäuseinnere Verbindung von Steckverbindern 4 mit Anschlussbuchsen 3, die in ihrer Gestaltung beliebig in dem Fachmann bekannter Weise gewählt werden können, eine einfache und schnelle Verkabelung auch bei komplexen Verkabelungssituationen erreicht werden kann. Auch besitzen die so aufgebauten Verteilersysteme eine hohe Flexibilität bei Änderungen der Konfiguration.

## Patentansprüche

1. Verteilermodul zur Verwendung in modularen Verteilerfeldern (5) zur Verbindung analog oder digital geschalteter Anschlussbuchsen (3) mit weiteren Verteilerfeldern (5) oder weiterführenden Leitungen oder Endgeräten, wobei das Verteilermodul mehrere Anschlussbuchsen (3) an einer Frontseite aufweist, **dadurch gekennzeichnet,**
**dass** das Verteilermodul (1) mehrere Einzelmodule mit jeweils eigenem allseits geschlossenes Gehäuse oder mehrere Anschlussbuchsen (3) mit allseits geschlossenem Gehäuse (2) um die Mehrheit der Anschlussbuchsen (3) aufweist und auf der der Frontseite gegenüberliegenden Rückseite ein Steckverbinder (4) angeordnet ist, welcher durch eine entsprechende Verkabelung im Gehäuse (2) mit den mehreren Anschlussbuchsen (3) an der Frontseite des Verteilermoduls (1) verbunden ist.

2. Verteilermodul nach Anspruch 1 mit mehreren Einzelmodulen mit jeweils einer Anschlussbuchse auf der Frontseite.

3. Verteilermodul nach Anspruch 1 mit mehreren Anschlussbuchsen auf der Frontseite.

4. Verteilermodul nach einem der Ansprüche 1-3, **dadurch gekennzeichnet, dass** es sich bei den Anschlussbuchsen (3) um RJ45-Anschlussbuchsen handelt.

5. Verteilermodul nach einem der Ansprüche 1 bis 4, **dadurch gekennzeichnet, dass** es sich bei dem Steckverbinder (4) um einen Steckverbinder vom Centronics-Typ mit mindestens 48 Polen handelt.

6. Verteilermodul nach einem der Ansprüche 1-3, **dadurch gekennzeichnet, dass** es sich bei den Anschlussbuchsen (3) um Anschlussbuchsen zum Anschluss von optischen Lichtwellenleiterkabeln handelt.

7. Verteilermodul nach Anspruch 6, **dadurch gekennzeichnet,**
**dass** es sich bei dem Steckverbinder (4) um einen Steckverbinder zum Anschluss von optischen Lichtwellenleiterkabeln handelt.

8. Modulares Verteilerfeld zur Verbindung mit weiteren modularen Verteilerfeldern oder mit weiterführenden Leitungen oder Endgeräten, **dadurch gekennzeichnet, dass** es ein oder mehrere Verteilermodule gemäß einem der Ansprüche 1 bis 7 enthält.

9. Verteilerfeld nach Anspruch 8, **dadurch gekennzeichnet, dass** es bei einer Einbaubreite von 19 Zoll und einer Einbauhöhe von 1 HE bis zu 8 Verteilermodule gemäß einem der Ansprüche 1 bis 7 enthält.

10. Verwendung der Verteilermodule gemäß einem der Ansprüche 1 bis 7 oder der Verteilerfelder gemäß einem der Ansprüche 8 oder 9 in Kabelkanälen, Bodentanks oder in Consolidation Points bei der festen oder mobilen Gebäudeverkabelung.

## Claims

1. Distribution module for the use in modular distribution panels (5) for connecting analogously or digitally switched connection sockets (3) with other distribution panels (5) or continuing lines or terminal devices, the distribution module comprising a plurality of connection sockets (3) at one front side **characterised in that** the distribution module (1) has a plurality of single modules with each having a housing (2) which is closed at all sides or a plurality of connection sockets (3) with a housing (2) which is closed at all sides, around the plurality of the connection sockets (3) and **in that** on the back side opposite to the front side a connector (4) is arranged which is connected by way of a corresponding wiring in the housing (2) with the plurality of the connection sockets (3) at the front side of the distribution module (1).

2. Distribution module as claimed in claim 1 comprising a plurality of single modules with each having a connecting socket at the front side.

3. Distribution module as claimed in claim 1 comprising a plurality of connection sockets at the front side.

4. Distribution module as claimed in any of claims 1 - 3, **characterised in that** the connection sockets (3) are RJ 45 connection sockets.

5. Distribution module as claimed in any of claims 1 to 4 **characterised in that** the connector (4) is a connector of the type Centronics with at least 48 poles.

6. Distribution module as claimed in any of claims 1- 3, **characterised in that** the connection sockets (3) are connection sockets for the connection of optical fibre cables.

7. Distribution module as claimed in claim 6, **characterised in that** the connector (4) is a connector for the connection of optical fibre cables.

8. Modular Distribution panel for the connection with other modular distribution panels or continuing lines or terminal devices **characterised in that** it comprises one or more distribution modules according to any of claims 1 to 7.

9. Distribution panel as claimed in claim 8, **characterised in that** at a paving width of 19 inches and an installation height of 1 HE it comprises up to 8 distribution modules as claimed in any of claims 1 to 7.

10. Use of the distribution modules as claimed in any of claims 1 to 7 or of the distribution panels according to any of claims 8 or 9 in cable channels, ground tanks or consolidation points at the immobile or mobile structured cabling.

## Revendications

1. Module de distribution pour l'utilisation dans les panneaux modulaires (5) pour la connection des douilles de raccordement (3) qui sont couplées dans une manière analogue or digitale, avec d'autres panneaux de distribution (5) ou des câbles continuants ou des apareils terminaux, le module de distribution comprenant plusieures douilles de raccordement (3) à un devant, characterisé en ce que le module de distribution (1) comporte une pluralité de modules singuliers avec respectivement un boîtier fermé et isolé de tous les côtés ou une pluralité de douilles de raccordement (3) avec un boîtier fermé de tous les côtés (2) autour de la pluralité de douilles de raccordement (3), et ou à l'arrière opposée au devant un connecteur (4) est arrangé qui est relié par le câblage correspendant dans le boîtier (2) avec la pluralité de douilles de raccordement (3) au devant du module de distribution (1).

2. Module de distribution selon la revendication 1, comprenant une pluralité des modules singuliers comprenant à chaque fois une douille de raccordement au devant.

3. Module de distribution module selon la revendication 1, comprenant une pluralité des douilles de raccordement au devant.

4. Module de distribution selon l'une des revendications 1 - 3, **caractérisé en ce que** les douilles de raccordement (3) sont des douilles de raccordement RJ 45.

5. Module de distribution selon l'une des revendications 1 - 4, **caractérisé en ce que** le connecteur (4) est un connecteur du type Centronics avec au moins 48 pôles.

6. Module de distribution selon l'une des revendications 1 - 3, **caractérisé en ce que** les douilles de raccordement (3) sont des douilles de raccordement pour la connection des câbles de fibre optique.

7. Module de distribution selon la revendication 6, **caractérisé en ce que** le connecteur (4) est un connecteur pour la connection des câbles de fibre optique.

8. Modulaire Panneau de distribution pour la connection avec d' autres panneaux dedistribution ou avec des câbles additionnels ou des apareils terminaux **caractérisé en ce qu'**il comprend un module ou plusieurs modules de distribution selon l'une des revendications 1 à 7.

9. Panneau de distribution selon la revendication 8 **caractérisé en ce qu'**à une largeur d 'installation de 19 pouces et une hauteur d'installation de 1 HE il comporte jusqu'à 8 modules de distribution selon l'une des revendications 1 à 7.

10. Utilisation des modules de distribution selon l'une des revendications 1 à 7 ou des panneaux de distribution selon l'une des revendications 8 ou 9 aux goulottes électriques, des réservoirs au sol ou des points de consolidation au câblage mobile ou immobile.
